# EUROPÄISCHE PATENTSCHRIFT

(11) **EP 1 308 801 B1**
(45) Veröffentlichungstag und Bekanntmachung des Hinweises auf die Patenterteilung: **23.03.2005**
(21) Anmeldenummer: 02021406.0
(22) Anmeldetag: 25.09.2002
(51) Int. Cl.: G05B 13/02, B60H 1/00, G05D 7/01

(54) **Motoransteuerung für einen Motor mit Rückmeldepotentiometer**
Motor drive for a motor with feedback potentiometer
Commande de moteur pour un moteur avec une potentiomètre d'asservissement

(30) Priorität: 26.10.2001 DE 10152996
(43) Veröffentlichungstag der Anmeldung: 07.05.2003
(73) Patentinhaber: Preh GmbH, 97616 Bad Neustadt a.d. Saale (DE)
(72) Erfinder: Rüttiger, Anton, 97772 Wildflecken (DE); Schmitt, Mario, 97616 Salz (DE)
(74) Vertreter: Dietrich, Barbara, Dipl.-Ing.

(56) Entgegenhaltungen:
- DE-A- 3 727 499
- DE-A- 19 955 461

## Beschreibung

Die Erfindung betrifft eine Motoransteuerung für einen Motor mit einem Rückmeidepotentiometer, vorzugsweise zur zentralen Luftklappenanlenkung, nach dem Oberbegriff des Patentanspruchs 1.

Im Bereich der Klimatisierung, beispielsweise von Kraft- und Nutzungsfahrzeugen, weisen Luftkanäle einer Heizungs-, Klima- und/oder Lüftungsanlage Klappen zur Steuerung von Luft- oder Wasserströmen auf. Diese Klappen werden entweder mechanisch, z.B. über Bowdenzüge oder Flexwellen, oder motorisch verstellt.

Aus der DE 199 55 461 A1 ist ein Stellmotor bekannt, der ein durchstellbares Rückmeldepotentiometer aufweist. Erwähnt wird, dass die Ansteuerung an den Motor softwaremäßig berechnet oder direkt mit der Drehbewegung des Bedienelements erfolgen kann.

Während häufig für jede Klappe ein Motor verwendet wird, ist aus der DE 197 16 229 A1 eine Vorrichtung zur Verstellung von Luftregulierklappen in Klimaanlagen bekannt, welche Kurvenscheiben aufweist, wodurch die Verstellung wenigsten zweier Klappen mit nur einem Motor möglich ist.

Auch aus der DE 196 07 652 A1 ist ein Getriebe zum Steuern von Luftklappen einer Heizungs- und/oder Klimaanlage bekannt, welches nur einen Motor benötigt, um mehrere Klappen steuern zu können.

Die DE 37 27 499 A1 offenbart eine Vorrichtung zum Steuern oder Regeln der Innenraumtemperatur, insbesondere eines Kraftfahrzeugs. Dies erfolgt mit einer elektrischen Stellvorrichtung mit einem Stellmotor mit einem Rückmeldepoteniometer. Die Stellvorrichtung ist durch eine Putsfolge steuerbar, die abhängig von einer Heizungssteuerung oder -regelung veränderbar ist. Die Aufgabe der Erfindung besteht darin, eine einfache Motoransteuerung für einen Motor mit einem Rückmeldepotentiometer aufzuzeigen.

Gelöst wird die Aufgabe durch die Merkmale des Patentanspruchs 1.

Der Erfindung liegt die Idee zugrunde, *aufbauend auf den Einsatz eines* durchdrehbaren Potentiometers und einer eigens gestaltete Steuerelektronik das Ansteuern eines Motors mit dem durchdrehbaren Potentiometer zu erreichen. Dabei wird in der Steuerelektronik der Motoransteuerung die Winkeldifferenz zwischen einem verstellten Stellpotentiometer und dem Motorrückmeldepotentiometer ermittelt, um daraus bei einer Winkeldifferenz größer 180° den kürzesten Verstellweg zur Sollpositionseinstellung für den Motor zu bestimmen.

Ein nicht definierter Bereich am Rückmeldepotentiometer, der bekanntlich durch das Abheben des Schleifers beim Übergang vom Anfang zum Ende der Potentiometerbahn (oder umgekehrt) bei einem durchdrehbaren Potentiometer gebildet wird, ist dabei vernachlässigbar klein und wird von der Steuerelektronik ausgeglichen.

Anhand eines Ausführungsbeispieles mit Zeichnung soll die Erfindung näher erläutert werden.

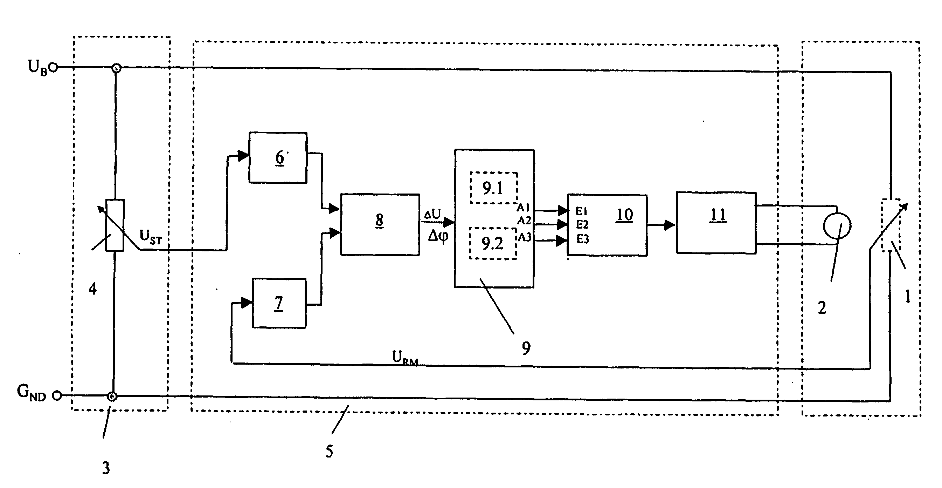

Es zeigt die einzige Figur ein Blockschaltbild für eine zentrale Luftklappenanlenkung mit durchdrehbarem Rückmeldepotentiometer 1 für einen Motor 2 einer Klimaanlage (nicht näher dargestellt). Diese weist in bekannter Art und Weise einem Klimageräte - Bedienteil 3 auf, welches ein Stellpotentiometer 4 beinhaltet.
Zwischen dem Motor 2 und dem Klimageräte - Bedienteil 3 ist eine Steuerelektronik 5 zur Ansteuerung des Motors 2 eingebunden. Die Steuerelektronik 5 weist zwei Eingangsverstärker 6, 7 auf, von denen jeweils ein Ausgang A1 auf einen Differenzbilder 8 geführt sind. Eingangsseitig, E1, ist der Eingangsverstärker 6 mit dem Potentiometerabgriff des Stellpotentiometers 4 verbunden, während auf den Eingang E1 des Eingangsverstärkers 7 der Potentiometerabgriff des Rückmeldepotentiometers 1 geführt ist.
Beide Eingangsverstärker sind über die Betriebsspannung normiert. Dadurch werden Schwankungen und Störungen der Versorgungsspannung unterdrückt.
Beide Eingänge E1 sind in Abhängigkeit der Motorkenndaten und bekannter Störspannungen des Klimagerätes normiert.
Der Differenzbildner 8 ist ausgangsseitig A1 mit einem Vergleicher 9 verbunden. Der Vergleicher 9 weist in besonderer Form zwei Fensterkomparatoren 9.1, 9.2 auf, einen für die Auswertung der Winkeldifferenz Δϕ aus der Spannungsdifferenz ΔU aus dem Differenzbildner 8 und einen für den Vergleich mit einem abgelegten Toleranzfeld. Dazu ist im Vergleicher 9 eine Schwelle, die zum Erkennen des 180° Winkelunterschiedes benötigt wird, hinterlegt. Das Erkennen der Winkeldifferenz kleiner 180° erfolgt durch einen Vergleich der Differenzspannung mit U_{B}/2. Ist diese Differenzspannung größer U_{B}/2, so ist die Winkeldifferenz kleiner 180°. Der Vergleicher 9 ist ausgangsseitig A1 - A3 auf Eingänge E1, E2 und E3 einer Ansteuerlogik 10 geführt. Für die Ansteuerlogik 10 werden im Vergleicher 9 die Signale generiert, unter anderem positive und negative Hysteresen, die für die Ansteuerung eines der Ansteuerlogik 10 nachfolgenden Motortreibers 11 benötigt werden. Der Motortreiber 11 ist mit dem Motor 2 verbunden.

Die Funktion der Steuerelektronik 5 läßt sich wie folgt beschreiben:

Da diese Steuerelektronik 5, bedingt durch die Tatsache, daß sowohl positive als auch negative Signale verwendet werden, mit einer virtuellen Masse arbeitet, werden an den beiden Eingänge E1 der Eingangsverstärker 6, 7 die vom Stellpotentiometer 4 und vom Rückmeldepotentiometer 1 gelieferten Eingangsspannungen/-signale U_{ST} und U_{RM} durch einen Spannungsteiler (nicht näher dargestellt) auf 1/3 U_{STd} und U_{RMd} herunter geteilt. Durch diese Maßnahme wird sichergestellt, daß bei abgehobenen Schleifer ( Überschlag zwischen 356° und 360°) die Eingangsverstärker 6, 7 auf einem definierten Signal U_{D} liegen. Um diesen hochohmigen Spannungsteiler nicht durch die nachfolgenden Stufen im Eingangsverstärker 6, 7 zu belasten, erfolgt eine Entkopplung durch einen Impedanzwandler im jeweiligen Eingangsverstärker 6, 7. Innerhalb des Eingangsverstärkers 6, 7 wird in der nächsten Stufe das jeweils gedrittelte Eingangssignal U_{STd} und U_{RMd} zur virtuellen Masse addiert.
Diese beiden Signale U_{STa} und U_{RMa} werden nunmehr auf den Differenzbildner 8 gelegt, der aus beiden eine Differenz Δ U bildet. Dieser Differenzwert Δ U gelangt an den Ver gleicher 9, in dem festgestellt wird, ob die Winkeldifferenz Δϕ zwischen dem Stellpotentiometer 4 und dem Rückmeldepotentiometer 1 größer oder kleiner 180° ist, d.h. ob die Differenz Δ U größer U_{B}/2 oder kleiner ist. Ist die Winkeldifferenz größer 180°, wird der Motor 2 entgegen der Verdrehbewegung am Stellpotentiometer 4 verstellt, ist die Winkel-differenz kleiner 180°, erfolgt eine Verstellung des Motors 2 in gleicher Drehrichtung wie beim Stellpotentiometer 4. Durch diese Feststellung wird die Drehrichtung des Motors 12 direkt beeinflußt. Das aus dem Vergleicher 9 resultierende Signal steuert über die Ansteuerlogik 5 den Motortreiber 11 und damit den Motor 2 solange, bis die Differenz Δ U in das gültige Toleranzfeld geregelt wird.

Da die genaue Position der Motorstellung, d.h. die Differenz zwischen Soll- und Istwert nicht erreicht werden kann und um zu vermeiden, daß nicht jedem Stellen nachgelaufen wird, ist zur Verstellungsüberwachung im Vergleicher 9 das Toleranzfeld hinterlegt.

Die Steuerelektronik 5 kann im Klimageräte - Bedienteil 3 oder am bzw. im Motor 2 integriert sein.

## Patentansprüche

1. Motoransteuerung mit einer Betriebsspannung (U_{B}) für einen Motor mit einem Rückmeldepotentiometer, welches die Winkelposition des Motors angibt, aufweisend ein Stellpotentiometer, zur Einstellung der Luftregulierung, mit einem durchdrehbaren Rückmeldepotentiometer und einer zwischen dem Motor (2) und dem Stellpotentiometer (4) eingebundenen Steuerelektronik (5), **dadurch gekennzeichnet, daß**
- in der Steuerelektronik (5) eine Winkeldifferenz (Δϕ) zwischen dem verstellten Stellpotentiometer (4) und dem Rückmeldepotentiometer (1) ermittelt wird, die
- sich aus dem Vergleich (6, 7) der vom Stellpotentiometer (4) und vom Rückmeldepotentiometer (1) gelieferten Signale (U_{ST}, U_{RM}) und einer daraus resultierenden Differenz (Δ U) bestimmt, die mit der halben Betriebsspannung (U_{B}) verglichen wird,
- um daraus bei einer Winkeldifferenz (Δϕ) größer 180° den kürzesten Verstellweg zur Sollpositionseinstellung für den Motor (2) zu bestimmen.

2. Motoransteuerung nach Anspruch 1, **dadurch gekennzeichnet, daß**
- die Steuerelektronik (5)
- zwei Eingangsverstärker (6, 7) aufweist, von denen jeweils ein Ausgang (A1) auf einen Differenzbilder (8) geführt sind, wobei
- ein Eingang (E1) des einen Eingangsverstärkers (6) mit dem Potentiometerabgriff des Stellpotentiometers (4) verbunden ist, während
- auf den Eingang (E1) des anderen Eingangsverstärkers (7) der Potentiometerabgriff des Rückmeldepotentiometers (1) geführt ist,
- der Differenzbildner 8 ausgangsseitig (A1) mit einem Vergleicher 9 verbunden ist, dessen Ausgänge (A1 - A3) auf Eingänge (E1, E2, E3) einer Ansteuerlogik 10 geführt sind,
- der mit einem nachfolgenden Motortreiber (11) für den Motor (2) verschaltet ist.

3. Motoransteuerung nach Anspruch 2, **dadurch gekennzeichnet, daß**
- die Eingänge (E1) der Eingangsverstärker (6, 7) in Abhängigkeit der Motorkenndaten und bekannter Störspannungen des Klimagerätes normiert sind.

4. Motoransteuerung nach einem der Ansprüche 1 bis 3, **dadurch gekennzeichnet, daß**
- an den beiden Eingängen (E1) der Eingangsverstärker (6, 7) die vom Stellpotentiometer (4) und vom Rückmeldepotentiometer (1) gelieferten Eingangsspannungen /
- signale (U_{ST}, U_{RM}) durch einen Spannungsteiler auf 1/3 herunter geteilt werden und die jeweils gedrittelten Eingangssignale (U_{STd}, U_{RMd}) zu einer virtuellen Masse dazu addiert.

5. Motoransteuerung nach einem der Ansprüche 1 bis 4, **dadurch gekennzeichnet, daß**
- der Vergleicher (9) zwei Fensterkomparatoren (9.1, 9.2) aufweist, wobei
- einer für die Auswertung der Winkeldifferenz (Δ U_{W}) aus dem Differenzbildner (8) und der andere für den Vergleich mit einem im Vergleicher (9) abgelegten Toleranzfeld dient.

6. Motoransteuerung nach Anspruch 5, **dadurch gekennzeichnet, daß**
- im Vergleicher (9) ein Schwellwert zum Erkennen eines 180° Winkelunterschiedes hinterlegt ist.

7. Motoransteuerung nach Anspruch 6 ***dadurch gekennzeichnet,* dass** bei Winkeldifferenz (Δϕ) größer 180°, wird der Motor (2) entgegen der Verdrehbewegung am Stellpotentiometer (4) verstellt.

## Claims

1. Motor drive with an operating voltage (U_{B}) for a motor having a feedback potentiometer, which indicates the angular position of the motor, having a setting potentiometer, for setting the air regulation, having a rotary feedback potentiometer and control electronics (5) integrated between the motor (2) and the setting potentiometer (4), **characterized in that**
- in the control electronics (5) an angular difference (Δϕ) between the adjusted setting potentiometer (4) and the feedback potentiometer (1) is determined which
- is ascertained from the comparison (6, 7) of the signals (U_{ST}, U_{RM}) supplied by the setting potentiometer (4) and the feedback potentiometer (1) and a difference (ΔU) resulting therefrom, which is compared with half the operating voltage (U_{B}),
- in order to ascertain therefrom the shortest adjustment path to the desired position setting for the motor (2) given an angular difference (Δϕ) greater than 180°.

2. Motor drive according to Claim 1, **characterized in that**
- the control electronics (5)
- have two input amplifiers (6, 7), from each of which an output (A1) is connected to a difference generator (8),
- an input (E1) of one input amplifier (6) being connected to the potentiometer tap of the setting potentiometer (4), while
- the potentiometer tap of the feedback potentiometer (1) is connected to the input (E1) of the other input amplifier (7),
- the difference generator (8) being connected on the output side (A1) to a comparator (9), whose outputs (A1-A3) are connected to inputs (E1, E2, E3) of a drive logic unit (10),
- which is connected to a downstream motor driver (11) for the motor (2).

3. Motor drive according to Claim 2, **characterized in that**
- the inputs (E1) of the input amplifiers (6, 7) are normalized in dependence on the motor characteristic data and known interference voltages of the air-conditioning unit.

4. Motor drive according to one of Claims 1 to 3, **characterized in that**
- at the two inputs (E1) of the input amplifiers (6, 7) the input voltages/signals (U_{ST}, U_{RM}) supplied by the setting potentiometer (4) and the feedback potentiometer (1) are divided down to 1/3 by a voltage divider and the respective input signals (U_{STd}, U_{RMd}) divided by three are also added to a virtual earth.

5. Motor drive according to one of Claims 1 to 4, **characterized in that**
- the comparator (9) has two window comparators (9.1, 9.2),
- one being used to evaluate the angular difference (ΔU_{W}) from the difference generator (8), and the other being used for the comparison with a tolerance band stored in the comparator (9).

6. Motor drive according to Claim 5, **characterized in that**
- a threshold value for detecting a 180° angular difference is stored in the comparator (9).

7. Motor drive according to Claim 6, **characterized in that**, given an angular difference (Δϕ) greater than 180°, the motor (2) is adjusted counter to the rotary movement at the setting potentiometer (4).

## Revendications

1. Commande de moteur avec une tension de service (U_{B}) pour un moteur muni d'un potentiomètre de réponse qui indique la position angulaire du moteur, présentant un potentiomètre de réglage pour régler la régulation de l'air, munie d'un potentiomètre de réponse à rotation totale et d'un circuit électronique de commande (5) intégré entre le moteur (2) et le potentiomètre de réglage (4), **caractérisée en ce que**
- dans le circuit électronique de commande (5) est déterminée une différence angulaire (Δϕ) entre le potentiomètre de réglage (4) et le potentiomètre de réponse (1), laquelle
- est déterminée à partir de la comparaison (6, 7) des signaux (U_{ST}, U_{RM}) délivrés par le potentiomètre de réglage (4) et le potentiomètre de réponse (1) et d'une différence (ΔU) qui en résulte, laquelle est comparée avec la moitié de la tension de service (U_{B}),
- afin d'en déterminer, dans le cas d'une différence angulaire (Δϕ) supérieure à 180°, le trajet de positionnement le plus court pour régler la position voulue du moteur (2).

2. Commande de moteur selon la revendication 1, **caractérisée en ce que**
- le circuit électronique de commande (5)
- présente deux amplificateurs d'entrée (6, 7) dont une entrée (A1) de chaque est acheminée à un calculateur de différence (8),
- l'entrée (E1) de l'un (6) des amplificateurs d'entrée étant reliée au curseur du potentiomètre de réglage (4), alors que
- le curseur du potentiomètre de réponse (1) est acheminé à l'entrée (E1) de l'autre amplificateur d'entrée (7),
- la sortie (A1) du calculateur de différence 8 est reliée à un comparateur 9 dont les sorties (A1 - A3) sont acheminées aux entrées (El, E2, E3) avec un circuit logique de commande 10,
- qui est raccordé en aval à un circuit de commande de moteur (11) pour le moteur (2).

3. Commande de moteur selon la revendication 2, **caractérisée en ce que**
- les entrées (E1) des amplificateurs d'entrée (6, 7) sont normalisées en fonction des caractéristiques du moteur et des tensions parasites connues du climatiseur.

4. Commande de moteur selon l'une des revendications 1 à 3, **caractérisée en ce que**
- les tensions / signaux d'entrée (U_{ST}, U_{RM}) délivrés aux deux entrées (E1) des amplificateurs d'entrée (6, 7) par le potentiomètre de réglage (4) et le potentiomètre de réponse (1) sont divisées à 1/3 par un diviseur de tension et les signaux d'entrée (U_{STd}, U_{RMd}) à chaque fois divisés par trois s'ajoutent à cela pour former une masse virtuelle.

5. Commande de moteur selon l'une des revendications 1 à 4, **caractérisée en ce que**
- le comparateur (9) présente deux comparateurs à fenêtre (9.1, 9.2),
- l'un servant à évaluer la différence angulaire (ΔU_{W}) résultant du calculateur de différence (8) et l'autre à la comparaison avec une fourchette de tolérance stockée dans le comparateur (9).

6. Commande de moteur selon la revendication 5, **caractérisée en ce qu'**une valeur de seuil destinée à détecter une différence angulaire de 180° est stockée dans le comparateur (9).

7. Commande de moteur selon la revendication 6, **caractérisée en ce qu'**en présence d'une différence angulaire (Δϕ) supérieure à 180°, le moteur (2) est positionné en sens inverse du sens de rotation sur le potentiomètre de réglage (4).
